# FASCICULE DE BREVET EUROPEEN

(11) **EP 3 013 193 B1**
(45) Date de publication et mention de la délivrance du brevet: **12.07.2017**
(21) Numéro de dépôt: 14732218.4
(22) Date de dépôt: 24.06.2014
(51) Int. Cl.: A47J 31/36

(54) **DISPOSITIF POUR PRÉPARER DES BOISSONS INFUSÉES COMPORTANT UN SUPPORT DE CAPSULE PIVOTANT**
VORRICHTUNG ZUR HERSTELLUNG VON AUFGUSSGETRÄNKEN MIT EINEM SCHWENKBAREN KAPSELTRÄGER
DEVICE FOR PREPARING INFUSED DRINKS, COMPRISING A PIVOTING CAPSULE SUPPORT

(30) Priorité: 25.06.2013 BE 201300438
(43) Date de publication de la demande: 04.05.2016
(73) Titulaire: TCONCEPT COMPANY S.P.R.L., 1325 Corroy-le-Grand (BE)
(72) Inventeur: VAN BELLEGHEM, Luc, 1325 Corroy-le-Grand (BE); BEAUFILS, Yohann, 14200 Hérouville St Clair (FR)
(74) Mandataire: Office Kirkpatrick
(86) Numéro de dépôt international: PCT/EP2014/063301
(87) Numéro de publication internationale: WO 2014/206993

(56) Documents cités:
- EP-A1- 2 112 093
- WO-A1-2008/014830

## Description

La présente invention se rapporte à un dispositif pour préparer des boissons infusées comprenant:
- un support agencé pour recevoir une capsule contenant une matière à infuser à l'état sec munie d'une face frontale comprenant une paroi filtrante, d'une bague entourant ladite face frontale, d'une face dorsale, opposée à ladite face frontale et d'une enveloppe solide s'étendant entre ladite bague et ladite face dorsale et définissant un récipient agencé pour contenir ladite matière à infuser,
- des moyens d'injection agencés pour introduire un liquide d'infusion dans ladite capsule,
- une chambre d'infusion présentant une ouverture sensiblement verticale, ladite ouverture sensiblement verticale étant agencée pour être en communication fluidique avec ladite paroi filtrante, ladite bague comportant des moyens d'étanchéité agencés pour maintenir la communication fluidique étanche par rapport à un milieu environnant, extérieur à une zone d'échange fluidique, et
- une sortie munie de moyens de fermeture/ouverture agencés pour permettre à un liquide infusé de s'écouler de la chambre d'infusion.

Un tel dispositif, procédé est connu par exemple du document EP2112093. Toutefois, selon ce document l'injection d'eau est effectuée au travers de la face dorsale de la capsule, nécessitant dès lors d'effectuer un perçage de celle-ci.

Malheureusement, un perçage dorsal de la capsule requiert d'une part un alignement horizontal pratiquement parfait de la pointe servant à percer la face dorsale et d'autre part de fabriquer une capsule avec une zone de rupture. Dès lors, la fabrication d'un tel dispositif est complexe car elle demande de la mécanique de précision pour obtenir une pointe parfaitement perpendiculaire à la face dorsale à rompre que l'utilisation du dispositif au cours du temps met en péril. De plus, la capsule restent souvent empalée sur la pointe et ne peut donc être aisément évacuée sans intervention humaine, qui elle-même requiert parfois de démonter une partie du dispositif ou de rendre la zone dans laquelle la capsule se trouve bloquée aisément accessible. Il existe donc un besoin de recourir à un système d'éjection d'une capsule alternatif.

L'invention a pour but de pallier les inconvénients de l'état de la technique en procurant une invention permettant de simplifier la conception de la machine et de solutionner les problèmes de capsules bloquées et/ou empalées sur ladite pointe.

Pour résoudre ce problème, il est prévu suivant l'invention, un dispositif, tel qu'indiqué au début caractérisé en ce que ledit support est sous la forme d'un siège comportant une structure basale de forme complémentaire à la forme de ladite enveloppe, ledit siège étant sensiblement ouvert sur le haut pour permettre une réception de ladite capsule lors d'une descente de celle-ci, ledit siège comportant une saillie munie d'une zone de fixation et d'un segment solidaire de ladite zone de fixation et formant un angle compris entre 25 et 80 degrés avec un plan horizontal médian audit siège, et d'une jonction, entre ladite zone de fixation et le segment, munie d'un orifice au travers duquel passe un axe de pivot, sensiblement transversal à ladite saillie, ladite zone de fixation reliant ledit siège à ladite jonction, ledit segment se prolongeant de ladite jonction à une extrémité libre, et comportant une zone d'appui pour un moyen suiveur, ledit dispositif comprenant en outre, un moyen suiveur mis en mouvement par une came, par exemple solidaire d'un engrenage actionné par un servo-moteur, ladite came comprenant au moins une première partie de profil et une deuxième partie de profil, chaque partie de profil mettant en mouvement ledit moyen suiveur, ladite première partie de profil correspondant à une position du moyen suiveur telle que le moyen suiveur exerce une pression sur ladite zone d'appui de manière que le siège présente une position de réception de ladite capsule et assure l'alignement de la face frontale de la capsule avec ladite ouverture sensiblement verticale de ladite chambre d'infusion, ladite deuxième partie de profil correspondant à une position d moyen suiveur telle que le moyen suiveur se relâche de la position d'infusion vers une position de repos et n'exerce plus de pression sur ladite zone d'appui, permettant de libérer la capsule et de permettre son évacuation vers un réceptacle agencé pour recevoir ladite capsule à évacuer.

De manière avantageuse, le moyen suiveur (18) peut être soit un piston suiveur (18) soit un suiveur (18). Lorsque le piston suiveur (18) est un suiveur (18), la came est munie d'une contre-came qui fait office d'entraîneur.

Dans une forme de réalisation avantageuse selon la présente invention, ledit dispositif comprend également une tubulure d'injection dudit liquide d'infusion reliée à une partie supérieure de ladite chambre d'infusion à proximité de ladite ouverture sensiblement verticale.

De manière particulièrement préférentielle, ladite chambre d'infusion est au moins formée partiellement d'une matière à base de polyfluorure, comme par exemple du PTFE, FEP, or PFA.

De manière tout aussi préférentielle, le dispositif selon l'invention comprend en outre des moyens de nettoyage agencés pour introduire un liquide de rinçage dans ladite chambre d'infusion.

Avantageusement, le dispositif selon l'invention comprend également un moyen de chauffage dudit liquide d'infusion.

De préférence, le dispositif selon l'invention comprend un réservoir de liquide d'infusion, relié ou comprenant ledit moyen de chauffage dudit liquide d'infusion.

En particulier, le dispositif comprend également, selon la présente invention, une pompe reliée d'une part à ladite tubulure d'injection de liquide d'infusion et à une alimentation de liquide d'infusion, raccordée audit dispositif de chauffage dudit liquide d'infusion.

Dans une variante selon la présente invention, le dispositif comporte en outre une pompe reliée d'une part à ladite tubulure d'injection de liquide d'infusion et à une alimentation de liquide d'infusion, éventuellement sous la forme dudit réservoir de liquide d'infusion.

De préférence, le dispositif selon l'invention comprend un dispositif régulateur de pression, relié à ladite tubulure d'injection de liquide d'infusion et à une alimentation de liquide d'infusion, éventuellement en amont ou en aval de ladite pompe, lorsqu'elle est présente.

Avantageusement, ladite tubulure d'injection de liquide d'infusion présente une zone rectiligne, dont une extrémité est reliée à ladite chambre d'infusion, ladite zone rectiligne étant sensiblement verticale.

Plus particulièrement, ladite zone rectiligne de ladite tubulure d'injection de liquide d'infusion est au moins formée partiellement d'une matière à base de polyfluorure, comme par exemple du PTFE, FEP, or PFA.

Dans une forme de réalisation particulièrement préférentielle, ladite zone rectiligne de ladite tubulure d'injection de liquide d'infusion est solidaire de ladite chambre d'infusion et est par exemple obtenue par moulage simultané de ladite chambre d'infusion et de ladite zone rectiligne.

Dans une autre forme de réalisation particulièrement préférentielle, ladite chambre d'infusion comporte un sommet par lequel passe un premier plan tangent de tête horizontal et un plan médian séparant la chambre d'infusion en deux parties dont une première partie comporte ladite ouverture sensiblement verticale, ladite ouverture sensiblement verticale présentant également un sommet par lequel passe un deuxième plan tangent horizontal, parallèle audit premier plan tangent de tête horizontal, ladite tubulure d'injection dudit liquide d'infusion étant reliée à ladite chambre d'infusion au travers d'un orifice de passage de liquide d'infusion traversant une paroi extérieure de ladite chambre d'infusion, ledit orifice de passage de liquide d'infusion étant situé entre le premier et le deuxième plans tangents et dans ladite première partie.

D'autres formes de réalisation du dispositif suivant l'invention sont indiquées dans les revendications annexées.

L'invention a aussi pour objet un procédé comprenant les étapes de :
- introduction d'une capsule contenant une matière à infuser à l'état sec munie d'une face frontale comprenant une paroi filtrante, d'une bague entourant ladite face frontale, d'une face dorsale, opposée à ladite face frontale et d'une enveloppe solide s'étendant entre ladite bague et ladite face dorsale et définissant un récipient agencé pour contenir ladite matière à infuser, dans une position dans laquelle ladite face frontale est sensiblement verticale, sur un support de capsule,
- injection d'un liquide d'infusion dans ledit récipient de ladite capsule,
- infusion dudit liquide d'infusion avec ladite matière sèche à infuser de façon à former ladite boisson infusée dans ladite chambre d'infusion en communication fluidique avec le récipient de la capsule, et
- évacuation dudit liquide infusé par une ouverture localisée dans le fond de ladite chambre d'infusion après ladite étape d'infusion,
Ce procédé est caractérisé en ce que ledit support sous forme d'un siège comportant une structure basale de forme complémentaire à la forme de ladite enveloppe, ledit siège étant sensiblement ouvert sur le haut pour permettre une réception de ladite capsule lors d'une descente de celle-ci, ledit siège comportant une saillie munie d'une zone de fixation et d'un segment solidaire de ladite zone de fixation et formant un angle compris entre 25 et 80 degrés avec un plan horizontal médian dudit siège, et d'une jonction, entre ladite zone de fixation et le segment, munie d'un orifice au travers duquel passe un axe de pivot, sensiblement transversal à ladite saillie, ladite zone de fixation reliant ledit siège à ladite jonction, ledit segment se prolongeant de ladite jonction à une extrémité libre, et comportant une zone d'appui pour un moyen suiveur mis en mouvement par une came, par exemple solidaire d'un engrenage actionné par un servo-moteur, est en position de réception lors de ladite introduction de la capsule dans laquelle ledit moyen suiveur est entraîné par une première partie de profil de ladite came et exerce une première pression sur ladite zone d'appui au moins jusqu'à la fin de ladite étape d'évacuation du liquide infusé et est en position d'évacuation de la capsule après ladite étape d'infusion dans laquelle ledit moyen suiveur est entraîné par une deuxième partie de profil de ladite came et se relâche de la position de réception vers une position d'évacuation de la capsule, n'exerçant plus de pression sur ladite zone d'appui et permettant de libérer la capsule pour son évacuation vers un réceptacle agencé pour recevoir ladite capsule à évacuer.

Avantageusement, ladite injection d'un liquide d'infusion dans ledit récipient de ladite capsule a lieu par injection dudit liquide d'infusion dans la chambre d'infusion en communication fluidique avec ledit récipient de ladite capsule, ledit liquide d'infusion s'écoulant dans la chambre d'infusion percolant au travers de ladite paroi filtrante pour pénétrer dans ledit récipient de la capsule.

Dans un mode de réalisation préféré de la présente invention, une partie de l'étape d'infusion a lieu simultanément à ladite étape d'injection.

Dans un autre mode préféré de l'invention, ladite injection dudit liquide d'infusion est effectuée de haut en bas et provoque des turbulences dans le liquide d'infusion déjà présent dans la chambre d'infusion, de manière à homogénéiser le contenu du liquide d'infusion.

De préférence, le procédé selon la présente invention comprend en outre une étape de nettoyage dans laquelle un fluide de rinçage est introduit et évacué de la chambre d'infusion et lors de laquelle ledit siège est en position de réception, au moins au début de ladite étape de nettoyage.

D'autres formes de réalisation du procédé suivant l'invention sont indiquées dans les revendications annexées.

D'autres caractéristiques, détails et avantages de l'invention ressortiront de la description donnée ci-après, à titre non limitatif et en faisant référence aux dessins annexés.
La figure 1 est une vue schématique du dispositif selon l'invention.
La figure 2 est une vue schématique d'un support de capsule pivotant selon l'invention.
La figure 3 est une vue schématique d'un support de capsule pivotant selon l'invention.
La figure 4 représente une vue d'une variante du dispositif selon la présente invention.
La figure 5 illustre une vue d'une variante du dispositif selon la présente invention.

Sur les figures, les éléments identiques ou analogues portent les mêmes références.

Un aspect de la présente invention concerne un dispositif destiné à recevoir une capsule d'ingrédients et d'extraire l'ingrédient en injectant un liquide au sein d'une capsule et dans et via une chambre d'infusion.

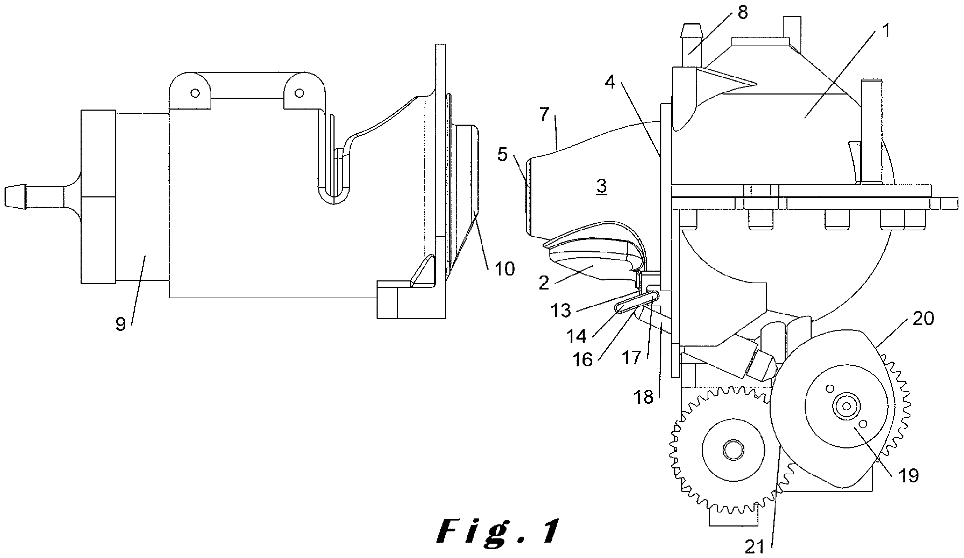

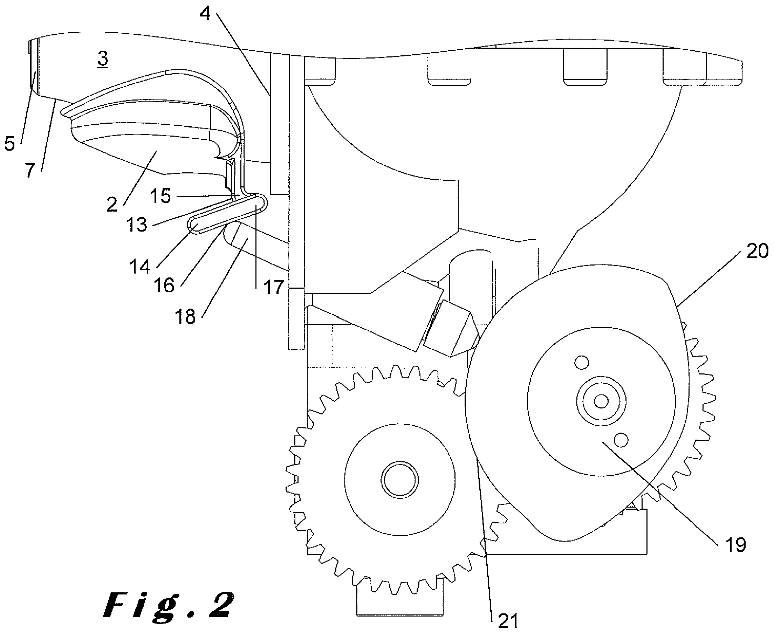

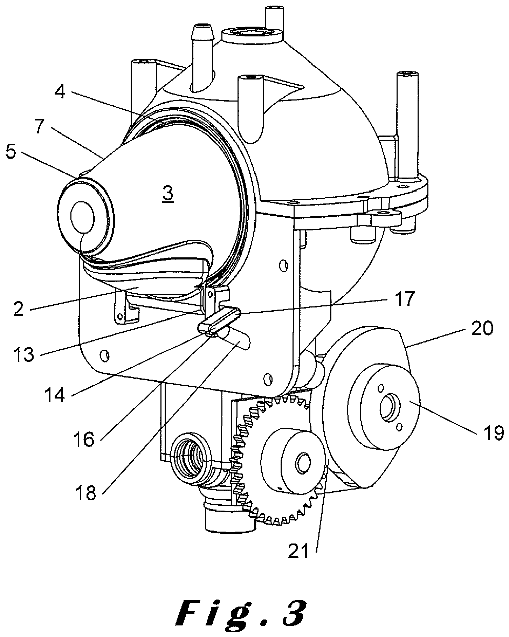

Comme on peut le voir aux figures 1 à 5, le dispositif pour préparer des boissons infusées selon l'invention comprend un support (2) agencé pour recevoir une capsule (3) contenant une matière à infuser à l'état sec munie d'une face frontale (4) comprenant une paroi filtrante, d'une bague entourant ladite face frontale (4), d'une face dorsale (5), opposée à ladite face frontale (4) et d'une enveloppe solide (7) s'étendant entre ladite bague et ladite face dorsale (5) et définissant un récipient agencé pour contenir ladite matière à infuser.

Le dispositif comporte également des moyens d'injection agencés pour introduire un liquide d'infusion dans ladite capsule (3) et une chambre d'infusion (1) présentant une ouverture sensiblement verticale (8), ladite ouverture sensiblement verticale (8) étant agencée pour être en communication fluidique avec ladite paroi filtrante, ladite bague comportant des moyens d'étanchéité agencés pour maintenir la communication fluidique étanche par rapport à un milieu environnant, extérieur à une zone d'échange fluidique.

Le dispositif comporte également une sortie munie de moyens de fermeture/ouverture agencés pour permettre à un liquide infusé de s'écouler de la chambre d'infusion.

Dans le dispositif illustré aux figures 1 à 5, les moyens d'injection dudit liquide d'infusion aboutissent dans la chambre d'infusion (1) par une tubulure d'injection de liquide d'infusion.

La capsule (3) sera positionnée entre deux parties. Les deux parties sont disposés de manière à être mobile par rapport à l'autre d'une position ouverte - pour l'insertion ou le retrait d'une capsule (3) - à une position de fermeture - pour faire passer un liquide chauffé au sein de la capsule (3).

A cette fin, la dispositif comporte un cylindre (9), comme illustré à la figure 1, comprenant une première extrémité et une deuxième extrémité, ladite première extrémité comprenant une zone de contact (10), de préférence une zone de contact présentant une surface plane, agencée pour pousser ladite face dorsale (5) de la capsule (3), et des moyens de translation agencés pour créer un mouvement horizontal de translation relatif entre ledit cylindre (9) et ladite chambre d'infusion (1) de manière à maintenir l'étanchéité entre la capsule (3) et ladite chambre d'infusion (1) par une force de compression exercée sur lesdits moyens d'étanchéité maintenant la communication fluidique, lesdits moyens de translation sont reliés audit cylindre (9), ledit cylindre (9) présentant une première position reculée et une deuxième position de contact, lesdits moyens de translation étant agencés pour déplacer ledit cylindre (9) entre ladite première position et ladite deuxième position, correspondant à une position dans laquelle ladite capsule (3) est en contact étanche avec ladite chambre d'infusion (1) et où ladite force de compression est exercée sur lesdits moyens d'étanchéités.

De cette façon, la présente invention permet de fournir un appareil où l'injection d'eau est effectuée dans la chambre d'infusion (1) ou dans le récipient de la capsule (3) et qui permet donc de se passer d'un moteur basse tension pour actionner le perçage de la face dorsale (5) de la capsule (3) et pour amener l'eau via l'orifice ainsi percé dans la face dorsale (5). Un simple moyen de translation utilisant l'énergie présente ou humaine est prévu, sans dispositif additionnel comme un moteur basse tension permet d'effecteur une translation relative entre la chambre d'infusion (1) et un cylindre (9) maintenant l'étanchéité entre la capsule (3) et la chambre d'infusion (1) pour assurer la communication fluidique étanche entre les deux.

De plus, de cette façon, le liquide d'infusion pénètre au moyen de la tubulure d'injection dans ladite chambre d'infusion (1) par le haut de la chambre d'infusion et s'écoule de manière à remplir progressivement l'ensemble constitué de la chambre d'infusion (1) en communication fluidique avec ledit récipient défini par ladite enveloppe solide (7) s'étendant entre ladite bague et ladite face dorsale (5), dans lequel se trouve la matière à infuser. Le récipient de la capsule (3) est également rempli progressivement à la même vitesse que la chambre d'infusion (1) et le liquide d'infusion qui alimente la chambre d'infusion (1) ou la capsule (3), en s'écoulant ainsi du haut vers le bas, crée des turbulences dans une partie de liquide d'infusion déjà présent formant ainsi des turbulences dans le liquide d'infusion contenu dans l'ensemble constitué de la chambre d'infusion (1) et de la capsule (3) permettant d'améliorer l'homogénéité du liquide d'infusion qui devient au cours du temps le liquide infusé et un brassage de ce liquide d'infusion. De plus, cette injection de liquide d'injection via la chambre d'infusion (1) permet d'obtenir une différence de température du liquide d'infusion présent dans la chambre d'infusion et celui présent dans le récipient de la capsule (3) comprise entre 3 et 7°C et typiquement d'environ 5°C. Notons que durant toute la phase d'injection de liquide d'infusion, le liquide d'infusion nouvellement injecté réchauffe le liquide d'infusion déjà présent.

La présente invention concerne plus particulièrement le système de positionnement et d'éjection d'une capsule(3). Il est important de correctement positionner la capsule (3) de sorte que le dispositif se referme correctement autour de celle-ci et qu'une bonne étanchéité soit ainsi réalisée pour garantir de bonnes conditions d'infusion. Un mauvais positionnement peut endommager la capsule (3); et ainsi affecter les conditions d'infusion. Le chargement de la capsule (3) doit aussi être facile, sans tâtonnement quant à la position correcte de la capsule (3) dans le dispositif. Le chargement doit être aussi rapide que possible et ne pas nécessiter de manipulations excessives.

Le but de la présente invention est de mettre à disposition du consommateur un système de positionnement et d'éjection de la capsule (3) qui soit de conception plus simple et mécaniquement fiable.

A cette fin, ledit support (2) est sous la forme d'un siège (2) comportant une structure basale de forme complémentaire à la forme de ladite enveloppe (7). Le siège (2) est sensiblement ouvert sur le haut pour permettre une réception de ladite capsule (3) lors d'une descente de celle-ci et comprend une saillie (13) munie d'une zone de fixation (15) et d'un segment (14) solidaire de ladite zone de fixation (15) et formant un angle compris entre 25 et 80 degrés avec un plan horizontal médian dudit siège (2) ainsi qu'une jonction (17), entre ladite zone de fixation (15) et le segment (14), munie d'un orifice au travers duquel passe un axe de pivot, sensiblement transversal à ladite saillie (13). La zone de fixation (15) relie le siège (2) à ladite jonction (17) alors que le segment (14) se prolonge de ladite jonction (17) à une extrémité libre, et comportant une zone d'appui pour le moyen suiveur (18).

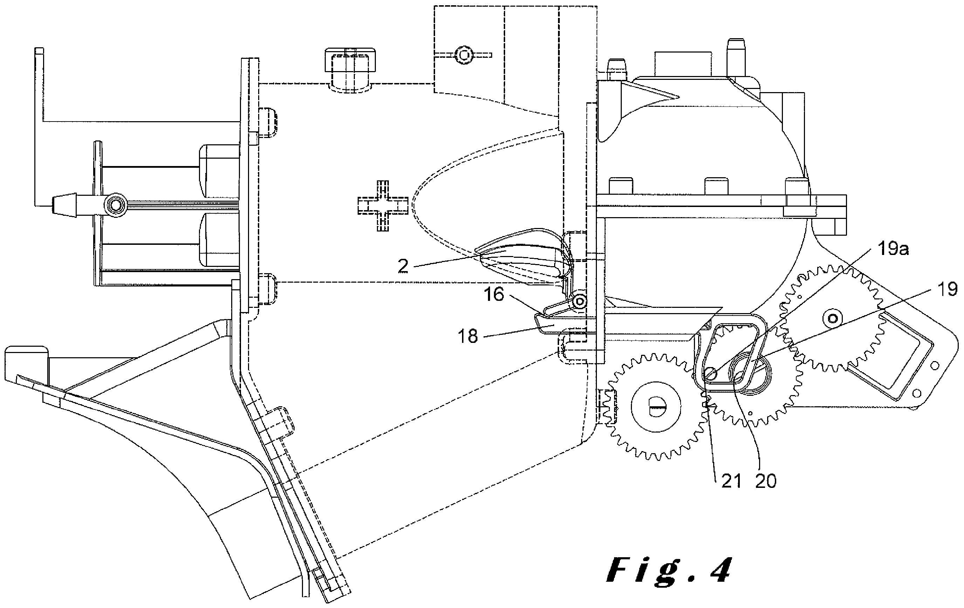

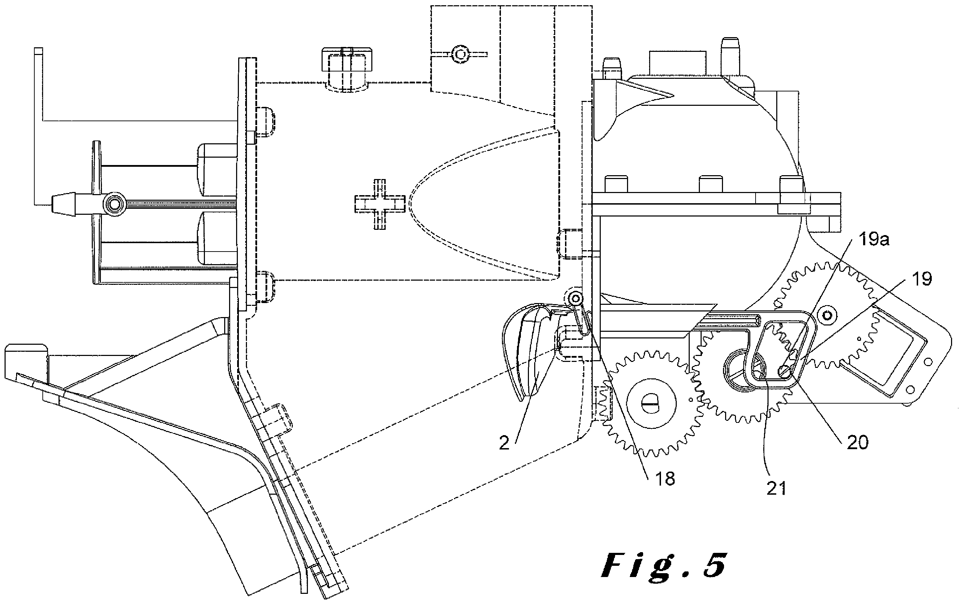

De manière avantageuse, le moyen suiveur (18) peut être soit un piston suiveur (18) comme illustré aux figures 1 à 3 soit un simple suiveur (18) tel que représenté aux figures 4 et 5.

Le piston suiveur (18), illustré aux figures 1 à 3, est mis en mouvement par une came (19) actionnée par un arbre à came et couplé à une vanne ou est solidaire d'un engrenage actionné par un servo-moteur. La came (19) comprend au moins une première partie de profil (21) et une deuxième partie de profil (20), chaque partie de profil mettant en mouvement ledit piston suiveur (18).

La première partie de profil (21) correspond à une position de piston suiveur (18) telle que le piston exerce une pression sur ladite zone d'appui de manière que le siège (2) présente une position de réception de ladite capsule (3) et assure l'alignement de la face frontale (4) de la capsule (3) avec ladite ouverture sensiblement verticale (8) de ladite chambre d'infusion (1).

La deuxième partie de profil (20) correspond à une position de piston suiveur (18) telle que le piston se relâche de la position d'infusion vers une position de repos et n'exerce plus de pression sur ladite zone d'appui, permettant de libérer la capsule (3) et de permettre son évacuation vers un réceptacle agencé pour recevoir ladite capsule (3) à évacuer.

Les figures 4 et 5 illustrent un moyen suiveur (18) qui se présente sous la forme d'un simple suiveur (18). Ce mode préféré comprend tous les éléments qui ont été décrits précédemment, en particulier pour le moyen suiveur (18) illustré aux figures 1 à 3.Toutefois, dans cette configuration préférée du dispositif suivant l'invention, le suiveur (18) est mis en mouvement par une came (19) qui est munie d'une contre-came qui fait office d'entraîneur.

Ainsi, lorsque la contre-came est adjacente à la première partie de profil (21), comme illustré à la figure 4, le suiveur exerce une pression sur ladite zone d'appui de telle façon que le siège (2) est prêt à recevoir la capsule (3).

Lorsque la contre-came est adjacente à la deuxième partie de profil (20), comme représenté à la figure 5, le suiveur présente une position de repos où il n'exerce plus de pression sur la zone d'appui. La capsule (3) peut alors être libérée du dispositif selon l'invention. En fait, le dispositif selon l'invention, illustré aux figures 1 à 5, permet de faire passer la capsule (3) depuis une position d'insertion à une position d'infusion lorsque qu'au moins une des deux parties mobiles du dispositif positionne celui-ci en position fermée, elle le passe dans sa position d'éjection et lorsque la partie mobile est ouverte après l'infusion, la capsule (3) est dégagée naturellement sous le simple effet de la gravitation. Elle tombe dans un tiroir ou tout autre moyen de récupération de capsule (3) usagée et le consommateur est prêt pour recharger le dispositif.

Afin de gérer ces différentes positions, le dispositif comporte un siège (2) pivotant permettant d'être mis dans une position de réception de la capsule (3) ou mis dans une position permettant l'éjection de la capsule (3) par gravité.

Le dispositif selon la présente invention coordonne également les positions du siège (2), support de la capsule (3) en tenant compte des processus inhérents à une infusion comprenant une chambre d'infusion (1).

Avantageusement cette chambre d'infusion (1) connait un ou des cycles d'injection d'eau chauffée, permettant l'infusion des matières contenues dans la capsule (3). Cette phase d'injection d'eau nécessitera un parfait positionnement et mise en étanchéité de la capsule (3) avec la chambre et une position fermée du canal d'écoulement du liquide infusé.

A l'issue de la durée d'infusion le canal d'écoulement sera ouvert en direction de la tasse.

Typiquement ce dispositif comprend une vanne multi-voies. Une fois le liquide écoulé, un second processus débute afin d'injecter un liquide ou un gaz de rinçage dans la chambre d'infusion (1). Ce processus débute avec le support (2) de la capsule (3) maintenue dans sa position de réception et toujours en étanchéité avec la chambre (1). Ensuite, le support (2) de la capsule (3) passera en position d'éjection et la capsule (3) sera éjectée par gravité. Cette phase permettant à la fin du cycle de rinçage de s'effectuer sans présence de la capsule (3) et donc sans risque que le liquide infusé qui pourrait encore s'y trouver s'écoule dans la chambre d'infusion (1).

Les positions du support dictées par la came (19) sont donc couplées aux positions de la vanne multi-voies gérant l'écoulement du liquide infusé ou du liquide de rinçage de la chambre d'infusion (1).

Il est bien entendu que la présente invention n'est en aucune façon limitée aux formes de réalisations décrites ci-dessus et que bien des modifications peuvent y être apportées sans sortir du cadre des revendications annexées.

## Revendications

1. Dispositif pour préparer des boissons infusées comprenant:
- un support (2) agencé pour recevoir une capsule (3) contenant une matière à infuser à l'état sec munie d'une face frontale (4) comprenant une paroi filtrante, d'une bague entourant ladite face frontale (4), d'une face dorsale (5), opposée à ladite face frontale (4) et d'une enveloppe solide (7) s'étendant entre ladite bague et ladite face dorsale (5) et définissant un récipient agencé pour contenir ladite matière à infuser,
- des moyens d'injection agencés pour introduire un liquide d'infusion dans ladite capsule (3),
- une chambre d'infusion (1) présentant une ouverture sensiblement verticale (8), ladite ouverture sensiblement verticale (8) étant agencée pour être en communication fluidique avec ladite paroi filtrante, ladite bague comportant des moyens d'étanchéité agencés pour maintenir la communication fluidique étanche par rapport à un milieu environnant, extérieur à une zone d'échange fluidique, et
- une sortie munie de moyens de fermeture/ouverture agencés pour permettre à un liquide infusé de s'écouler de la chambre d'infusion (1),
**caractérisé en ce que** ledit support (2) est sous la forme d'un siège (2) comportant une structure basale de forme complémentaire à la forme de ladite enveloppe (7), ledit siège (2) étant sensiblement ouvert sur le haut pour permettre une réception de ladite capsule (3) lors d'une descente de celle-ci, ledit siège (2) comportant une saillie (13) munie d'une zone de fixation (15) et d'un segment (14) solidaire de ladite zone de fixation (15) et formant un angle compris entre 25 et 80 degrés avec un plan horizontal médian dudit siège (2), et d'une jonction (17), entre ladite zone de fixation (15)j et le segment, munie d'un orifice au travers duquel passe un axe de pivot, sensiblement transversal à ladite saillie (13), ladite zone de fixation (15) reliant ledit siège (2) à ladite jonction (17), ledit segment (14) se prolongeant de ladite jonction (17) à une extrémité libre, et comportant une zone d'appui pour un moyen suiveur (18), ledit dispositif comprenant en outre, un moyen suiveur (18) mis en mouvement par une came (19), par exemple solidaire d'un engrenage actionné par un servo-moteur, ladite came (19) comprenant au moins une première partie de profil (21) et une deuxième partie de profil (20), chaque partie de profil mettant en mouvement ledit moyen suiveur (18), ladite première partie de profil (21) correspondant à une position du moyen suiveur (18) telle que le moyen suiveur (18) exerce une pression sur ladite zone d'appui (16) de manière que le siège (2) présente une position de réception de ladite capsule (3) et assure l'alignement de la face frontale (4) de la capsule (3) avec ladite ouverture sensiblement verticale (8) de ladite chambre d'infusion (1), ladite deuxième partie de profil (20) correspondant à une position du moyen suiveur (18) telle que le moyen suiveur se relâche de la position d'infusion vers une position de repos et n'exerce plus de pression sur ladite zone d'appui, permettant de libérer la capsule (3) et de permettre son évacuation vers un réceptacle agencé pour recevoir ladite capsule (3) à évacuer.

2. Dispositif selon la revendication 1, comprenant en outre une tubulure d'injection dudit liquide d'infusion reliée à une partie supérieure de ladite chambre d'infusion (1) à proximité de ladite ouverture sensiblement verticale, un moyen de chauffage dudit liquide d'infusion et une pompe reliée d'une part à ladite tubulure d'injection de liquide d'infusion et à une alimentation de liquide d'infusion, éventuellement sous la forme dudit réservoir de liquide d'infusion raccordée audit dispositif de chauffage dudit liquide d'infusion.

3. Dispositif selon l'une quelconque des revendications précédentes, comprenant en outre des moyens de nettoyage agencés pour introduire un liquide de rinçage dans ladite chambre d'infusion (1).

4. Dispositif selon l'une des revendications 2 et 3, comprenant, en outre un réservoir de liquide d'infusion, relié ou comprenant ledit moyen de chauffage dudit liquide d'infusion.

5. Dispositif selon l'une quelconque des revendications 1 à 4, comprenant en outre un dispositif régulateur de pression, relié à ladite tubulure d'injection de liquide d'infusion et à une alimentation de liquide d'infusion, éventuellement en amont ou en aval de ladite pompe, lorsqu'elle est présente.

6. Dispositif selon l'une quelconque des revendications précédentes, dans lequel ladite tubulure d'injection de liquide d'infusion présente une zone rectiligne, dont une extrémité est reliée à ladite chambre d'infusion, ladite zone rectiligne étant sensiblement verticale.

7. Dispositif selon la revendication 6, dans lequel ladite zone rectiligne de ladite tubulure d'injection de liquide d'infusion est solidaire de ladite chambre d'infusion (1) et est obtenue par moulage simultané de ladite chambre d'infusion et de ladite zone rectiligne.

8. Dispositif selon l'une quelconque des revendications précédentes, dans lequel ladite chambre d'infusion (1) comporte un sommet par lequel passe un premier plan tangent de tête horizontal et un plan médian séparant la chambre d'infusion (1) en deux parties dont une première partie comporte ladite ouverture sensiblement verticale (8), ladite ouverture sensiblement verticale (8) présentant également un sommet par lequel passe un deuxième plan tangent horizontal, parallèle audit premier plan tangent de tête horizontal, ladite tubulure d'injection dudit liquide d'infusion étant reliée à ladite chambre d'infusion (1) au travers d'un orifice de passage de liquide d'infusion traversant une paroi extérieure de ladite chambre d'infusion (1), ledit orifice de passage de liquide d'infusion étant situé entre le premier et le deuxième plans tangents et dans ladite première partie.

9. Procédé de préparation de boissons infusées, comprenant les étapes de :
- introduction d'une capsule (3) contenant une matière à infuser à l'état sec munie d'une face frontale (4) comprenant une paroi filtrante, d'une bague entourant ladite face frontale (4), d'une face dorsale (5), opposée à ladite face frontale (4) et d'une enveloppe solide (7) s'étendant entre ladite bague et ladite face dorsale (5) et définissant un récipient agencé pour contenir ladite matière à infuser, dans une position dans laquelle ladite face frontale (4) est sensiblement verticale, sur un support (2) de capsule (3),
- injection d'un liquide d'infusion dans ledit récipient de ladite capsule (3),
- infusion dudit liquide d'infusion avec ladite matière sèche à infuser de façon à former ladite boisson infusée dans ladite chambre d'infusion (1) en communication fluidique avec le récipient de la capsule (3), et
- évacuation dudit liquide infusé par une ouverture localisée dans le fond de ladite chambre d'infusion (1) après ladite étape d'infusion,
**caractérisé en ce que** ledit support (2) sous forme d'un siège (2) comportant une structure basale de forme complémentaire à la forme de ladite enveloppe (7), ledit siège (2) étant sensiblement ouvert sur le haut pour permettre une réception de ladite capsule (3) lors d'une descente de celle-ci, ledit siège (2) comportant une saillie (13) munie d'une zone de fixation (15) et d'un segment (14) solidaire de ladite zone de fixation (15) et formant un angle compris entre 25 et 80 degrés avec un plan horizontal médian dudit siège (2), et d'une jonction (17), entre ladite zone de fixation (15) et le segment (14), munie d'un orifice au travers duquel passe un axe de pivot, sensiblement transversal à ladite saillie (13), ladite zone de fixation (15) reliant ledit siège (2) à ladite jonction (17), ledit segment (14) se prolongeant de ladite jonction (17) à une extrémité libre, et comportant une zone d'appui pour un moyen suiveur (18) mis en mouvement par une came (19), est en position de réception lors de ladite introduction de la capsule (3) dans laquelle ledit moyen suiveur (19) est entraîné par une première partie de profil (21) de ladite came et exerce une première pression sur ladite zone d'appui au moins jusqu'à la fin de ladite étape d'évacuation du liquide infusé et est en position d'évacuation de la capsule (3) après ladite étape d'infusion dans laquelle ledit moyen suiveur (18) est entraîné par une deuxième partie de profil (20) de ladite came (19) et se relâche de la position de réception vers une position d'évacuation de la capsule (3), n'exerçant plus de pression sur ladite zone d'appui et permettant de libérer la capsule (3) pour son évacuation vers un réceptacle agencé pour recevoir ladite capsule (3) à évacuer.

10. Procédé selon la revendication 9, dans lequel ladite injection d'un liquide d'infusion dans ledit récipient de ladite capsule (3) a lieu par injection dudit liquide d'infusion dans la chambre d'infusion (1) en communication fluidique avec ledit récipient de ladite capsule (3), ledit liquide d'infusion s'écoulant dans la chambre d'infusion (1) percolant au travers de ladite paroi filtrante pour pénétrer dans ledit récipient de la capsule (3).

11. Procédé selon l'une des revendications 9 et 10, dans lequel une partie de l'étape d'infusion a lieu simultanément à ladite étape d'injection.

12. Procédé selon l'une quelconque des revendications 9 à 11, dans lequel ladite injection dudit liquide d'infusion est effectuée de haut en bas et provoque des turbulences dans le liquide d'infusion déjà présent dans la chambre d'infusion, de manière à homogénéiser le contenu du liquide d'infusion.

13. Procédé selon l'une quelconque des revendications 9 à 12, comprenant en outre une étape de nettoyage dans laquelle un fluide de rinçage est introduit et évacué de la chambre d'infusion et lors de laquelle ledit siège est en position de réception, au moins au début de ladite étape de nettoyage.

## Patentansprüche

1. Vorrichtung zum Zubereiten von Aufgussgetränken, umfassend:
- einen Halter (2), der eingerichtet ist, um eine Kapsel (3) aufzunehmen, die eine aufzugießende Substanz im trockenen Zustand enthält und mit einer Vorderseite (4), die eine Filterwand umfasst, mit einem Ring, der die Vorderseite (4) umgibt, mit einer Rückseite (5), die der Vorderseite (4) gegenüberliegt, und mit einer festen Hülle (7), die sich zwischen dem Ring und der Rückseite (5) erstreckt und einen Behälter definiert, der eingerichtet ist, um die aufzugießende Substanz zu enthalten, versehen ist,
- Gießmittel, die eingerichtet sind, um eine Aufgussflüssigkeit in die Kapsel (3) einzuführen,
- eine Aufgusskammer (1), die eine im Wesentlichen senkrechte Öffnung (8) aufweist, wobei die im Wesentlichen senkrechte Öffnung (8) eingerichtet ist, um mit der Filterwand in Fluidkommunikation zu stehen, wobei der Ring Dichtungsmittel umfasst, die eingerichtet sind, um die Fluidkommunikation im Verhältnis zu einem umgebenden Umfeld außerhalb einer Fluidaustauschzone dicht zu halten, und
- einen Ausgang, der mit Schließ-/ Öffnungsmitteln versehen ist, die eingerichtet sind, um eine aufgegossene Flüssigkeit aus der Aufgusskammer (1) ablaufen zu lassen,
**dadurch gekennzeichnet, dass** der Halter (2) in Form eines Sitzes (2) vorliegt, der eine Basisstruktur umfasst, die eine Form aufweist, welche die Form der Hülle (7) ergänzt, wobei der Sitz (2) an der Oberseite im Wesentlichen offen ist, um eine Aufnahme der Kapsel (3) bei einem Absenken derselben zu ermöglichen, wobei der Sitz (2) einen Vorsprung (13) umfasst, der mit einer Befestigungszone (15) und einem Segment (14), das mit der Befestigungszone (15) fest verbunden ist und einen Winkel, der zwischen 25 und 80 Grad liegt, mit einer waagerechten Mittelebene des Sitzes (2) bildet, und mit einer Verbindungsstelle (17) zwischen der Befestigungszone (15) und dem Segment, die mit einer Mündung versehen ist, durch die eine Schwenkachse geht, die zu dem Vorsprung (13) im Wesentlichen querliegt, versehen ist, wobei die Befestigungszone (15) den Sitz (2) mit der Verbindungsstelle (17) verbindet, wobei das Segment (14) von der Verbindungsstelle (17) bis zu einem freien Ende weitergeht und eine Auflagezone für ein Stößelmittel (18) umfasst, wobei die Vorrichtung ferner ein Stößelmittel (18) umfasst, das durch einen Nocken (19) in Gang gesetzt wird, der beispielsweise mit einem Räderwerk fest verbunden ist, das von einem Servomotor betätigt wird, wobei der Nocken (19) mindestens einen ersten Profilteil (21) und einen zweiten Profilteil (20) umfasst, wobei jeder Profilteil das Stößelmittel (18) in Gang setzt, wobei der erste Profilteil (21) einer Position des Stößelmittels (18) entspricht, so dass das Stößelmittel (18) einen Druck auf die Auflagezone (16) ausübt, so dass der Sitz (2) eine Aufnahmeposition für die Kapsel (3) aufweist und die Ausrichtung der Vorderseite (4) der Kapsel (3) mit der im Wesentlichen senkrechten Öffnung (8) der Aufgusskammer (1) sicherstellt, wobei der zweite Profilteil (20) einer Position des Stößelmittels (18) entspricht, so dass sich das Stößelmittel aus der Aufgussposition in Richtung auf eine Ruheposition löst und keinen Druck mehr auf die Auflagezone ausübt, wodurch die Kapsel (3) freigegeben und in einen Behälter abgeführt werden kann, der eingerichtet ist, um die abzuführende Kapsel (3) aufzunehmen.

2. Vorrichtung nach Anspruch 1, ferner umfassend einen Stutzen zum Gießen der Aufgussflüssigkeit, der mit einem oberen Teil der Aufgusskammer (1) in der Nähe der im Wesentlichen senkrechten Öffnung verbunden ist, ein Mittel zum Erhitzen der Aufgussflüssigkeit und eine Pumpe, die einerseits mit dem Stutzen zum Gießen der Aufgussflüssigkeit und mit einer Aufgussflüssigkeitsversorgung verbunden ist, gegebenenfalls in der Form des Aufgussflüssigkeitsbehälters, der an die Heizvorrichtung der Aufgussflüssigkeit angeschlossen ist.

3. Vorrichtung nach einem der vorhergehenden Ansprüche, ferner umfassend Reinigungsmittel, die eingerichtet sind, um eine Spülflüssigkeit in die Aufgusskammer (1) einzuführen.

4. Vorrichtung nach einem der Ansprüche 2 und 3, ferner umfassend einen Aufgussflüssigkeitsbehälter, der mit dem Mittel zum Erhitzen der Aufgussflüssigkeit verbunden ist oder dieses umfasst.

5. Vorrichtung nach einem der Ansprüche 1 bis 4, ferner umfassend eine Druckregelungsvorrichtung, die mit dem Stutzen zum Gießen einer Aufgussflüssigkeit und mit einer Aufgussflüssigkeitsversorgung gegebenenfalls stromaufwärts oder stromabwärts von der Pumpe, soweit diese vorhanden ist, verbunden ist.

6. Vorrichtung nach einem der vorhergehenden Ansprüche, wobei der Stutzen zum Gießen einer Aufgussflüssigkeit eine geradlinige Zone aufweist, deren eines Ende mit der Aufgusskammer verbunden ist, wobei die geradlinige Zone im Wesentlichen senkrecht ist.

7. Vorrichtung nach Anspruch 6, wobei die geradlinige Zone des Stutzens zum Gießen einer Aufgussflüssigkeit mit der Aufgusskammer (1) fest verbunden ist und durch gleichzeitiges Formen der Aufgusskammer und der geradlinigen Zone erzielt wird.

8. Vorrichtung nach einem der vorhergehenden Ansprüche, wobei die Aufgusskammer (1) einen Scheitelpunkt umfasst, durch den eine erste waagerechte obere Tangentialebene und eine Mittelebene gehen, welche die Aufgusskammer (1) in zwei Teile trennen, von denen ein erster Teil die im Wesentlichen senkrechte Öffnung (8) umfasst, wobei die im Wesentlichen senkrechte Öffnung (8) ebenfalls einen Scheitelpunkt aufweist, durch den eine zweite waagerechte Tangentialebene geht, die zu der ersten waagerechten oberen Tangentialebene parallel ist, wobei der Stutzen zum Gießen der Aufgussflüssigkeit mit der Aufgusskammer (1) über eine Mündung zum Durchgang von Aufgussflüssigkeit verbunden ist, die durch eine Außenwand der Aufgusskammer (1) geht, wobei sich die Mündung zum Durchgang von Aufgussflüssigkeit zwischen der ersten und der zweiten Tangentialebene und in dem ersten Teil befindet.

9. Verfahren zum Zubereiten von Aufgussgetränken, umfassend folgende Schritte:
- Einführen einer Kapsel (3), die eine aufzugießende Substanz im trockenen Zustand enthält und mit einer Vorderseite (4), die eine Filterwand umfasst, mit einem Ring, der die Vorderseite (4) umgibt, mit einer Rückseite (5), die der Vorderseite (4) gegenüberliegt, und mit einer festen Hülle (7), die sich zwischen dem Ring und der Rückseite (5) erstreckt und einen Behälter definiert, der eingerichtet ist, um die aufzugießende Substanz zu enthalten, in einer Position, in der die Vorderseite (4) im Wesentlichen senkrecht ist, auf einem Halter (2) für Kapseln (3) versehen ist,
- Gießen einer Aufgussflüssigkeit in den Behälter der Kapsel (3),
- Aufgießen der Aufgussflüssigkeit mit der aufzugießenden Trockensubstanz, um das Aufgussgetränk in der Aufgusskammer (1) zu bilden, die mit dem Behälter der Kapsel (3) in Fluidkommunikation steht, und
- Abführen der aufgegossenen Flüssigkeit durch eine Öffnung, die sich im Boden der Aufgusskammer (1) befindet, nach dem Schritt des Aufgießens,
**dadurch gekennzeichnet, dass** sich der Halter (2) in Form eines Sitzes (2), der eine Basisstruktur umfasst, die eine Form aufweist, welche die Form der Hülle (7) ergänzt, wobei der Sitz (2) an der Oberseite im Wesentlichen offen ist, um eine Aufnahme der Kapsel (3) bei einem Absenken derselben zu ermöglichen, wobei der Sitz (2) einen Vorsprung (13) umfasst, der mit einer Befestigungszone (15) und einem Segment (14), das mit der Befestigungszone (15) fest verbunden ist und einen Winkel, der zwischen 25 und 80 Grad liegt, mit einer waagerechten Mittelebene des Sitzes (2) bildet, und mit einer Verbindungsstelle (17) zwischen der Befestigungszone (15) und dem Segment, die mit einer Mündung versehen ist, durch die eine Schwenkachse geht, die zu dem Vorsprung (13) im Wesentlichen querliegt, versehen ist, wobei die Befestigungszone (15) den Sitz (2) mit der Verbindungsstelle (17) verbindet, wobei das Segment (14) von der Verbindungsstelle (17) bis zu einem freien Ende weitergeht und eine Auflagezone für ein Stößelmittel (18) umfasst, das durch einen Nocken (19) in Gang gesetzt wird, in einer Aufnahmeposition beim Einführen der Kapsel (3) befindet, in der das Stößelmittel (19) von einem ersten Profilteil (21) des Nockens mitgenommen wird und einen ersten Druck auf die Auflagezone mindestens bis zum Ende des Schritts des Abführens der aufgegossenen Flüssigkeit ausübt, und sich in einer Position zum Abführen der Kapsel (3) nach dem Schritt des Aufgießens, in dem das Stößelmittel (18) von einem zweiten Profilteil (20) des Nockens (19) mitgenommen wird, befindet und sich aus der Aufnahmeposition in eine Position zum Abführen der Kapsel (3) löst und dabei keinen Druck mehr auf die Auflagezone ausübt und die Freigabe der Kapsel (3) ermöglicht, um sie in einen Behälter abzuführen, der eingerichtet ist, um die abzuführende Kapsel (3) aufzunehmen.

10. Verfahren nach Anspruch 9, wobei das Gießen einer Aufgussflüssigkeit in den Behälter der Kapsel (3) durch Gießen der Aufgussflüssigkeit in die Aufgusskammer (1) in Fluidkommunikation mit dem Behälter der Kapsel (3) erfolgt, wobei die Aufgussflüssigkeit in die Aufgusskammer (1) fließt und durch die Filterwand perkoliert, um in den Behälter der Kapsel (3) einzudringen.

11. Verfahren nach einem der Ansprüche 9 und 10, wobei ein Teil des Schritts des Aufgießens gleichzeitig mit dem Schritt des Gießens erfolgt.

12. Verfahren nach einem der Ansprüche 9 bis 11, wobei das Gießen der Aufgussflüssigkeit von oben nach unten erfolgt und in der Aufgussflüssigkeit, die sich bereits in der Aufgusskammer befindet, Turbulenzen hervorruft, um den Inhalt der Aufgussflüssigkeit zu vermischen.

13. Verfahren nach einem der Ansprüche 9 bis 12, ferner umfassend einen Schritt des Reinigens, in dem eine Spülflüssigkeit eingeführt wird und aus der Aufgusskammer abgeführt wird, und in dem sich der Sitz zumindest zu Beginn des Reinigungsschritts in einer Aufnahmeposition befindet.

## Claims

1. Device for preparing infused drinks comprising:
- a support (2) arranged to receive a capsule (3) containing a substance to be infused in the dry state provided with a front face (4) comprising a filter wall, a ring surrounding said front face (4), a back face (5), opposite said front face (4) and a solid casing (7) extending between said ring and said back face (5) and defining a container arranged to contain said substance to be infused,
- injection means arranged to introduce an infusion liquid into said capsule (3),
- an infusion chamber (1) having a substantially vertical opening (8), said substantially vertical opening (8) being arranged to be in fluid communication with said filter wall, said ring comprising sealing means arranged to keep the fluid communication tight in relation to a surrounding medium, outside a fluid exchange zone, and
- an outlet provided with closing/opening means arranged to enable an infused liquid to flow from the infusion chamber (1),
**characterised in that** said support is in the form of a seat (2) comprising a base structure having a complementary shape to the shape of said casing (7), said seat (2) being substantially open on the top to make it possible to receive said capsule (3) when it moves down, said seat (2) comprising a projection (13) provided with an attachment zone (15) and a segment (14) rigidly connected to said attachment zone (15) and forming an angle between 25 and 80 degrees with a median horizontal plane of said seat (2), and a junction (17), between said attachment zone (15) and the segment (14), provided with an opening through which a pivot axis passes, substantially transversal to said projection (13), said attachment zone (15) connecting said seat (2) to said junction (15), said segment (14) extending from said junction (17) to a free end, and comprising a bearing zone for following means (18), said device further comprising following means (18) moved by a cam (19), for example rigidly connected to a gear actuated by a servo-motor, said cam (19) comprising at least a first profile part (21) and a second profile part (20), each profile part moving said following means (18), said first profile part (21) corresponding to a position of the following means (18) such that the following means (18) apply pressure on said bearing zone such that the seat (2) has a position for receiving said capsule (3) and ensures the alignment of the front face (4) of the capsule (3) with said substantially vertical opening (8) of said infusion chamber (1), said second profile part (20) corresponding to a position of the following means (18) such that the following means are released from the infusion position to an idle position and no longer apply pressure on said bearing zone, making it possible to release the capsule (3) and enable the removal thereof to a receptacle arranged to receive said capsule (3) to be removed.

2. Device according to claim 1, further comprising a tube for injecting said infusion liquid connected to an upper part of said infusion chamber (1) in the vicinity of said substantially vertical opening, means for heating said infusion liquid, connected to said device for heating said infusion liquid and a pump connected on one hand to said infusion liquid injection tube and to a supply of infusion liquid, optionally in the form of said container of infusion liquid.

3. Device according to any of the above claims, further comprising cleaning means arranged to introduce a rinsing liquid into said infusion chamber (1).

4. Device according to anyone of claims 2 and 3, further comprising a container of infusion liquid, connected to or comprising said means for heating said infusion liquid.

5. Device according to any of claims 1 to 4, further comprising a pressure regulating device, connected to said infusion liquid injection tube and to a supply of infusion liquid, optionally upstream or downstream from said pump, if present.

6. Device according to any of the above claims, wherein said infusion liquid injection tube has a rectilinear zone, wherein one end is connected to said infusion chamber, said rectilinear zone being substantially vertical.

7. Device according to claim 6, wherein said rectilinear zone of said infusion liquid injection tube is rigidly connected to said infusion chamber (1) and is obtained by simultaneous moulding of said infusion chamber and said rectilinear zone.

8. Device according to any of the above claims, wherein said infusion chamber (1) comprises an apex through which pass a first horizontal top tangent plane and a median plane separating the infusion chamber (1) into two parts wherein a first part comprises said substantially vertical opening (8), said substantially vertical opening (8) also having an apex through which a second horizontal tangent plane passes, parallel with said first horizontal top tangent plane, said injection tube of said infusion liquid being connected to said infusion chamber (1) via an infusion liquid passage opening through an external wall of said infusion chamber (1), said infusion liquid passage opening being situated between the first and the second tangent planes and in said first part.

9. Method for preparing infused drinks, comprising the following steps:
- introducing a capsule (3) containing a substance to be infused in the dry state provided with a front face (4) comprising a filter wall, a ring surrounding said front face (4), a back face (5), opposite said front face (4) and a solid casing (7) extending between said ring and said back face (5) and defining a container arranged to contain said substance to be infused, in a position wherein said front face (4) is substantially vertical, onto a capsule (3) support (2),
- injecting an infusion liquid into said container of said capsule (3),
- infusing said infusion liquid with said dry substance to be infused so as to form said infused drink in said infusion chamber (1) in fluid communication with the capsule (3) container, and
- draining said infused liquid via an opening located in the bottom of said infusion chamber (1) after said infusion step,
**characterised in that** said support is in the form of a seat (2) comprising a base structure having a complementary shape to the shape of said casing (7), said seat (2) being substantially open on the top to make it possible to receive said capsule (3) when it moves down, said seat (2) comprising a projection (13) provided with an attachment zone (15) and a segment (14) rigidly connected to said attachment zone (15) and forming an angle between 25 and 80 degrees with a median horizontal plane of said seat (2), and a junction (17), between said attachment zone (15) and the segment (14), provided with an opening through which a pivot axis passes, substantially transversal to said projection (13), said attachment zone (15) connecting said seat (2) to said junction (15), said segment (14) extending from said junction (17) to a free end, and comprising a bearing zone for following means (18), said device further comprising following means (18) moved by a cam (19), is in the receiving position during said introduction of the capsule (3) wherein said following means (18) are driven by a first profile part (21) of said cam and apply a first pressure on said bearing zone at least until the end of said step for draining the infused liquid and is in the position for removing the capsule (3) after said infusion step wherein said following means (18) are driven by a second profile part (20) of said cam (19) and are released from the receiving position to a position for removing the capsule (3), no longer applying pressure on said bearing zone and making it possible to release the capsule (3) for the removal thereof to a receptacle arranged to receive said capsule (3) to be removed.

10. Method according to claim 9, wherein said injection of an infusion liquid into said container of said capsule (3) takes place by injecting said infusion liquid in the infusion chamber (1) in fluid communication with said container of said capsule (3), said infusion liquid flowing into the infusion chamber (1) percolating through said filter wall to enter said capsule (3) container.

11. Method according to one of claims 9 and 10, wherein a part of the infusion step takes place simultaneously with said injection step.

12. Method according to anyone of claims 9 to 11, wherein said injection of said infusion liquid is carried out from top to bottom and causes turbulence in the infusion liquid already present in the infusion chamber (1), so as to homogenise the contents of the infusion liquid.

13. Method according to anyone of claims 9 to 12, further comprising a cleaning step wherein a rinsing fluid is introduced into and drained from the infusion chamber (1) and during which said seat is in the receiving position, at least at the start of said cleaning step.
